# EUROPEAN PATENT APPLICATION

(11) **EP 3 836 111 A1**
(43) Date of publication of application: **16.06.2021**
(21) Application number: 19214510.0
(22) Date of filing: 09.12.2019
(51) Int. Cl.: G08G 1/00, G05D 1/02

(54) **A METHOD FOR OPERATING A TRANSPORTATION SYSTEM**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: BRANDIN, Magnus, 435 38 MÖLNLYCKE (SE); BÖLANDER, Markus, 411 19 GÖTEBORG (SE); SÖDERLUND, Markus, 443 51 LERUM (SE); OLSSON, Vanessa, 417 55 GÖTEBORG (SE)
(74) Representative: Zacco Sweden AB

(57) **Abstract**

The invention relates a method for operating a transportation system (20) comprising a plurality of vehicle platoons (21), where each vehicle platoon has a lead vehicle (2) and a plurality of vehicles (3) following the lead vehicle. The method comprises the steps of controlling the vehicle platoons (21) by means of a control system (30), driving the vehicle platoons (21) one after the other along a road (22) according to a predetermined route, and controlling the vehicle platoons (21) such that the vehicle platoons pass a vehicle station (23) with a predetermined frequency.

## Description

### TECHNICAL FIELD

The invention relates to a method for operating a transportation system and a control system for controlling vehicles of a transportation system.

### BACKGROUND

Today's transportation or traffic systems for transporting passengers have a relatively low capacity and public transport timetables often cannot be kept without delays. One way of trying to increase the capacity of the total traffic flow is to organize the vehicles in vehicle platoons, where each vehicle platoon has a lead vehicle and a plurality of following vehicles driving in a convoy after the lead vehicle.

There is however still a need for optimizing the use of such vehicle platoons and enabling individual vehicles to connect and disconnect to/from the vehicle platoons in an effective way without disturbances leading to delays and longer driving times.

### SUMMARY

An objective of the invention is to provide a method for operating a transportation system, by which method the transportation capacity of vehicle platoons can be improved.

The objective is achieved by a method for operating a transportation system comprising a plurality of vehicle platoons, where each vehicle platoon has a lead vehicle and a plurality of vehicles following the lead vehicle, and where the method comprises the steps of controlling the vehicle platoons by means of a control system, driving the vehicle platoons one after the other along a road according to a predetermined route, and controlling the vehicle platoons such that the vehicle platoons pass a vehicle station with a predetermined frequency.

The invention is based on the insight that by such a method, it is possible to provide a predetermined flow of vehicle platoons that can arrive and departure at exact time and with a predetermined speed at a vehicle station, without stopping at the vehicle station. The time, speed and position of the vehicles platoons can be synchronized by the control system. For reaching the desired destination, an individual vehicle has to connect and disconnect to/from a vehicle platoon while the vehicle platoon is moving with a predetermined speed. This will require that such a vehicle is accelerated and decelerated for connection and disconnection, respectively, to/from the vehicle platoon. On the other hand, the entire vehicle platoon does not need to be accelerated or decelerated for picking up or dropping off passengers which means that the total energy consumption can be reduced. In other words; when a vehicle is to connect or disconnect to/from a vehicle platoon, only the current vehicle has to be accelerated and decelerated, respectively, not the entire vehicle platoon that may include a lot of vehicles.

By frequency is meant the number of vehicle platoons per unit of time passing the vehicle station. The road suitably has lanes dedicated for the vehicle platoons only, making it possible to synchronize the vehicle platoons without external disturbances.

The road can be a ring road. By driving the vehicle platoons along the predetermined route following a ring road, the vehicle platoons can be driven with the predefined frequency along the road for repeatedly passing one or more vehicle stations along the road.

According to one embodiment of the method, the method comprises the step of controlling the vehicle platoons to maintain a predetermined distance between the vehicle platoons. Hereby, the predetermined frequency can be achieved while keeping the speed of the vehicle platoons substantially constant. By distance between the vehicle platoons is meant the distance between the lead vehicle of one vehicle platoon and the lead vehicle of the next vehicle platoon.

According to a further embodiment of the method, the method comprises the step of using the predetermined distance between the vehicle platoons for absorbing any accidental speed reduction of a vehicle platoon and thereafter accelerating the vehicle platoon for again achieving the predetermined distance between the vehicle platoons enabling the vehicle platoons to pass the vehicle station with the predetermined frequency. Hereby, a robust system less sensitive to operational disturbances can be achieved.

According to a further embodiment of the method, the method comprises the step of controlling the vehicle platoons such that the time between the point in time when a first vehicle platoon reaches the vehicle station and the point in time when the next vehicle platoon reaches the vehicle station is above 1.5 times, preferably above 2 times, the time for the entire first vehicle platoon to pass the vehicle station. Hereby, the distances between the vehicle platoons will be sufficient for allowing vehicles at the vehicle station to be connected to the vehicle platoons in a safe way when the vehicle platoons are passing the vehicle station.

According to a further embodiment of the method, the method comprises the step of controlling the vehicle platoons such that the time between the point in time when the first vehicle platoon reaches the vehicle station and the point in time when the next vehicle platoon reaches the vehicle station is below 10 times, preferably below 5 times, the time for the entire first vehicle platoon to pass the vehicle station. Hereby, the throughput of vehicle platoons can be kept at a relatively high level.

According to a further embodiment of the method, the method comprises the step of driving the vehicle platoons with a predetermined substantially constant speed. Hereby, energy losses due to acceleration or deceleration can be minimized.

According to a further embodiment of the method, the method comprises the step of providing vehicles for the vehicle platoons at the vehicle station, receiving information about the vehicle platoons which will pass the vehicle station without stopping at the vehicle station, and, based on the received information about a vehicle platoon incoming to the vehicle station, controlling a vehicle of the vehicles at the vehicle station to leave the vehicle station and accelerate along an acceleration ramp connected to the road, and thereafter controlling the vehicle to connect to the vehicle platoon when the vehicle platoon passes the vehicle station. Hereby, a vehicle can be connected to a vehicle platoon while the vehicle platoon is moving with a significant velocity. A vehicle may connect to the vehicle platoon having a certain planned destination without any delay and driver assistance. The information about the vehicle platoon can comprise for example the position and speed of the vehicle platoon, suitably received when the incoming vehicle platoon approaches the vehicle station, and/or the point in time the vehicle platoon will pass the vehicle station. Such information can be updated until the vehicle platoon has passed the vehicle station.

According to a further aspect of the invention, a further objective of the invention is to provide a control system for controlling vehicles of a transportation system, by which control system the transportation capacity of vehicle platoons can be improved.

The objective is achieved by a control system for controlling vehicles of a transportation system comprising a plurality of vehicle platoons, where each vehicle platoon has a lead vehicle and a plurality of vehicles following the lead vehicle, and where the control system is configured to control the vehicle platoons to drive one after the other along a road according to a predetermined route, and to control the vehicle platoons such that the vehicle platoons pass a vehicle station with a predetermined frequency.

In addition, the invention relates to a transportation system comprising a plurality of vehicle platoons and such a control system.

The advantages of the control system and the transportation system are similar to the advantages already discussed hereinabove with reference to some embodiments of the method.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 shows a vehicle platoon, and
Fig. 2 shows a transportation system with vehicle platoons and a control system for controlling the vehicle platoons.

### DETAILED DESCRIPTION OF EXAMPLE EMBODIMENTS

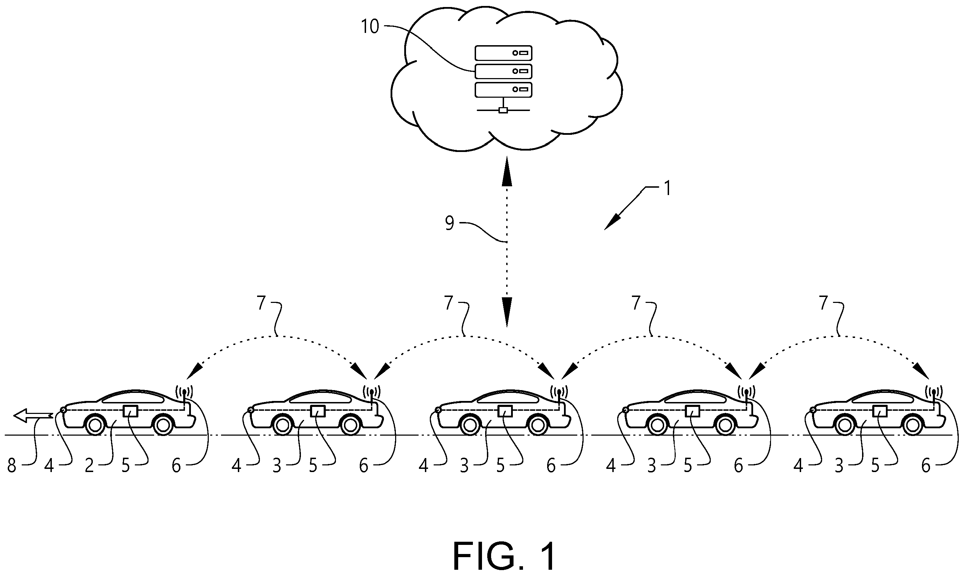

Fig. 1 shows a vehicle platoon 1 having a lead vehicle 2 and a plurality of following vehicles 3. The lead vehicle 2 and the following vehicles 3 are individual vehicles but driven together as a group or convoy. The following vehicles 3 are positioned in a line after the lead vehicle 2. The driving direction is indicated with an arrow 8. The lead vehicle 2 can be a so called autonomous or self-driving vehicle, or the lead vehicle 2 can be at least partly controlled by an operator of the lead vehicle. The following vehicles 3 of the vehicle platoon are suitably automatically controlled without any driver assistance. The vehicle platoon is suitably used for transportation of passengers of the vehicles, though the vehicles can also be used for transporting goods.

When driving in the vehicle platoon 1, the following vehicles 3 are controlled to follow the lead vehicle 2 or the vehicle closest to the front, such that when the speed of the lead vehicle 2 is increased/decreased the speed of the following vehicles 3 is increased/decreased correspondingly for maintaining or achieving the desired distances and time gaps between the vehicles. Further, when the lead vehicle 2 is changing driving direction, a following vehicle 3 will also change driving direction and follow the lead vehicle or rather the vehicle closest to the front.

For enabling the vehicles 2, 3 to be controlled, each vehicle can be provided with any suitable sensor equipment 4 for receiving information about the environment, and a control unit 5 for controlling the vehicle. The sensor equipment gives information about at least the vehicle closest to the front, but preferably the sensor equipment is covering 360 degrees around the vehicle for obtaining the information that is required for longitudinal and lateral control of the vehicle. Such sensor equipment 4 may comprise lidar, radar and ultrasonic sensors, cameras, etc. The information received by the sensor equipment is used by the control unit 5 for controlling the driving behaviour of the vehicle. In addition, maps, GPS, etc., can be used for determining the current position of a vehicle platoon or an individual vehicle of a vehicle platoon.

Alternatively or in addition to the sensor equipment 4, each vehicle 2, 3 is provided with a communication unit 6 for communicating with one or more of the other vehicles of the vehicle platoon 1. Such a communication unit 6 may comprise any suitable components for establish communication between the vehicles. For example, the communication unit 6 may comprise a transmitter and a receiver based on radio waves or microwaves. In other words, each vehicle can be part of a local network for communication 7 between the vehicles of the vehicle platoon 1. By means of the local network, control signals can be transmitted from one vehicle to another vehicle. The control signals received are then used by the control unit 5 arranged on the vehicle for controlling the driving behaviour of the vehicle. Such control signals received by the following vehicles 3 are preferably at least initially provided by the lead vehicle 2.

Such a vehicle platoon 1 of a transportation system is suitably part of a central network for communication 9 between the vehicle platoon 1 and a central control unit 10. By means of the central network, control signals can be transmitted from the central control unit 10 to the vehicle platoon 1 for controlling the driving behaviour of the vehicle platoon. Such control signals are preferably received by the lead vehicle 2 of the vehicle platoon, but could also be received by one or more of the following vehicles 3 of the vehicle platoon. The central control unit 10 can be part of a server of a wireless network, such as Internet, for cloud computing.

The term "connected" to a vehicle platoon used herein, means that a vehicle is part of the vehicle platoon following the route of the vehicle platoon, where the vehicle is driven with a predetermined distance and time gap relative to the other vehicles of the vehicle platoon. In addition to follow the lead vehicle of the vehicle platoon, the vehicle is suitably connected to said local network for communication between the vehicles associated with the current vehicle platoon. The vehicles of the vehicle platoon are however individually driven vehicles as previously described hereinabove, though driven together as a group or convoy. The term "disconnected" is the opposite to "connected", i.e. used for a vehicle not being part of the current vehicle platoon.

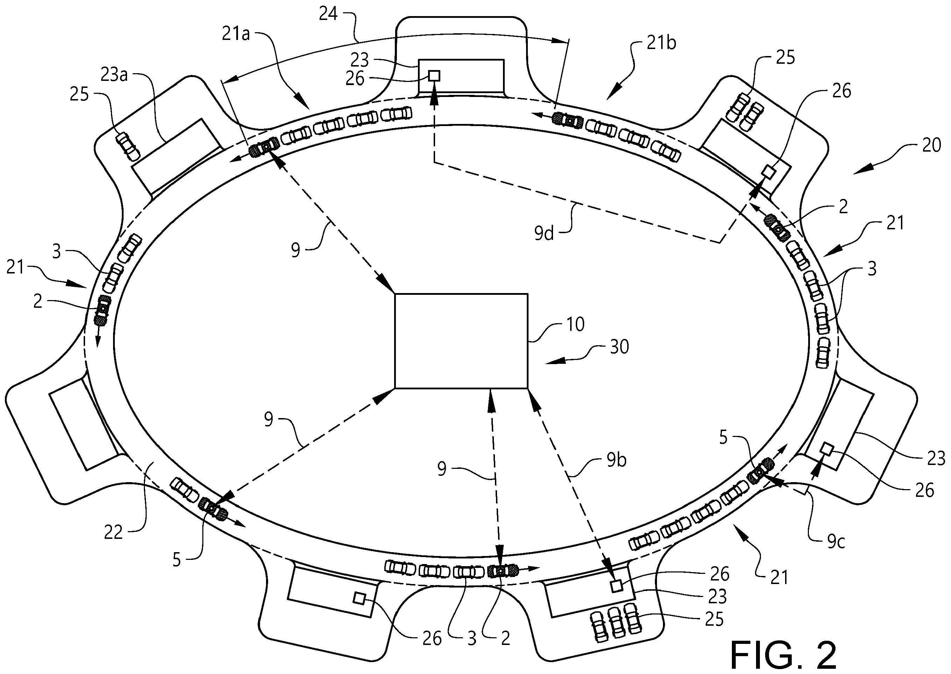

Fig. 2 shows a transportation system 20 which comprises a plurality of vehicle platoons 21, where each vehicle platoon has a lead vehicle 2 and a plurality of vehicles 3 following the lead vehicle as described hereinabove. The transportation system 20 further comprises a control system 30 configured to control the vehicle platoons to drive one after the other along a road 22 according to a predetermined route such that the vehicle platoons pass a vehicle station 23 with a predetermined frequency. In the example embodiment illustrated in Fig. 2, there are several vehicle platoons 21 and several vehicle stations 23 arranged at different positions along the road 22.

The vehicle station 23 is preferably a limited area adjacent to the road 22 which area is arranged and has space for a lot of vehicles 25 to be used by the transportation system 20. Also a net of smaller roads, and buildings can be arranged in this area. The vehicles 25 at the vehicle station 23 can be predetermined vehicles dedicated to be used in the transportation system and/or be any vehicle which has been driven to the vehicle station which vehicle is adapted and allowed to connect and log on to the transportation system.

It should be stressed that the operation of the transportation system 20 described herein is preferably performed by controlling the vehicle platoons 21 and the individual vehicles 25 by means of the equipment and control units described herein, without any assistance from any driver of any of the vehicles.

A method for operating a transportation system 20 comprising a plurality of vehicle platoons 21 will be described with reference to Fig. 2. The method comprises the steps of controlling the vehicle platoons 21 by means of the control system 30, driving the vehicle platoons 21 one after the other along the road 22 according to the predetermined route, and controlling the vehicle platoons 21 to pass a vehicle station 23, preferably all vehicle stations, with a predetermined frequency. The vehicle platoons 21 can be controlled to maintain a predetermined distance 24 between the vehicle platoons 21, i.e. the distance between two consecutive lead vehicles.

The predetermined frequency of vehicle platoons 21 is chosen in accordance with the current conditions. The method may comprise the steps of controlling the vehicle platoons 21 such that the time between the point in time when a first vehicle platoon 21a reaches the vehicle station 23a and the point in time when the next vehicle platoon 21b reaches the vehicle station 23a is above 1.5 times, preferably above 2 times, the time for the entire first vehicle platoon 21a to pass the vehicle station 23a, and below 10 times, preferably below 5 times, the time for the entire first vehicle platoon 21a to pass the vehicle station 23a.

However, as mentioned, the frequency can of course be chosen in accordance with the need of transport. For example, at night the frequency can be lower, such as 1 platoon/5 minutes. At the same time, the number of vehicles of the vehicle platoons can be varied according to the conditions, and further the requisite distance between the vehicle platoons may be dependent on the number of vehicles of the vehicle platoons.

As an example only, the frequency can be one vehicle platoon/minute when the time for each entire vehicle platoon to pass the vehicle station is 30 seconds. The time to pass a certain position, such as the vehicle station, is in turn dependent on the length and speed of the vehicle platoon. If the frequency is one vehicle platoon/minute and the maximal time to pass the vehicle station for a vehicle platoon is 30 seconds, this will result in a time gap between two consecutive vehicle platoons at the vehicle station of at least 30 seconds. The time gap is selected for enabling individual vehicles to connect and disconnect to/from vehicle platoons at the vehicle station.

By controlling the vehicle platoons 21 in a way striving for the same distance 24 between each pair of consecutive vehicle platoons, the predetermined frequency of vehicle platoons can be achieved while keeping the speed substantially constant to all vehicle platoons.

The predetermined distance 24 between the vehicle platoons 21 can also be used for absorbing any accidental speed reduction of a vehicle platoon without or with minor impact on the following vehicle platoons. In some cases, a temporarily speed reduction of a vehicle platoon and an associated reduction of the distance between two vehicle platoons may be unavoidable due to external factors. The current vehicle platoon can then be accelerated for again achieving the desired speed of the vehicle platoon and the predetermined distance between the vehicle platoons.

The method may further comprise the steps of providing vehicles 25 for the vehicle platoons 21 at the vehicle station 23, receiving information about the vehicle platoons which will pass the vehicle station without stopping at the vehicle station, and, based on the received information about a vehicle platoon incoming to the vehicle station, controlling a vehicle of the vehicles 25 at the vehicle station 23 to leave the vehicle station and accelerate along an acceleration ramp connected to the road, and thereafter controlling the vehicle to connect to the vehicle platoon when the vehicle platoon passes the vehicle station. It is also possible that more than one vehicle of the vehicles 25 at the vehicle station 23 are controlled to leave the vehicle station at the same time, and accelerate along the acceleration ramp and connect to the vehicle platoon.

With further reference to Fig. 2, the invention also relates to a control system 30 for controlling vehicles of a transportation system 20 comprising a plurality of vehicle platoons 21, where each vehicle platoon has a lead vehicle 2 and a plurality of vehicles 3 following the lead vehicle. The control system 30 is configured to control the vehicle platoons 21 to drive one after the other along a road 22 according to a predetermined route, and to control the vehicle platoons 21 such that the vehicle platoons pass a vehicle station 23 with a predetermined frequency.

As previously described, for controlling vehicle platoons and individual vehicles, the control system 30 can comprise one or more central control units 10 and/or one or more vehicle station control units 26, and/or one or more of the local control units 5 arranged on the vehicles, which units can be used individually and in cooperation.

In the example embodiment illustrated in Fig. 2, the control system 30 comprises a central control unit 10. The central control unit 10 is configured and arranged to communicate 9 with the vehicle platoons 21, preferably with the control unit 5 of the lead vehicle 2 of each vehicle platoon 21, for controlling the driving of the vehicle platoons 21. The central control unit 10 can also be configured and arranged to communicate 9b with a vehicle station control unit 26. The vehicle station control unit 26 can be arranged to control vehicles 25 at the vehicle station 23, such as vehicles which have been disconnected from vehicle platoons at the vehicle station and vehicles which are to leave the vehicle station and be connected to vehicle platoons, and vehicles which for any other reason have to be moved and repositioned within the vehicle station area. Although in the example embodiment illustrated in Fig. 2, the vehicle station control unit 26 is arranged at the vehicle station 23 as a separate unit, in another embodiment the vehicle station control unit could be a part of the central control unit.

Although the vehicle station control unit 26 and the vehicle platoons 21 can communicate with each other via the central control unit 10, the vehicle station control unit 26 and the control units 5 of the vehicles can suitably communicate 9c directly with each other, at least when the current vehicle is present at the vehicle station 23. Optionally, it is also possible that two or more vehicle station control units 26 can communicate 9d with each other.

The central control unit 10, the local control unit 5 arranged on a vehicle and the vehicle station control unit 26 may comprise one or more microprocessors and/or one or more memory devices or any other components for mutual communication, and for communicating with other equipment, and for controlling vehicle platoons and individual vehicles, and particularly for executing computer programs to perform the method described herein. Thus, the central control unit and/or the local control unit and/or the vehicle station control unit is preferably provided with a computer program comprising program code means for performing the steps of any example embodiment of the method described herein.

Optionally, the control system may comprise a decentralized network of computers not necessarily arranged in one and the same central control unit.

Alternatively or in addition to what has been described hereinabove, sensors can be arranged in the environment to the current road or area where the vehicle platoons or individual vehicles are driven. These sensors may provide information received by the control system. Such sensors could be a complement to the sensors of the vehicles for instance, giving further information and/or redundancy to the system.

It is to be understood that the present invention is not limited to the embodiments described above and illustrated in the drawings; rather, the skilled person will recognize that many changes and modifications may be made within the scope of the appended claims.

## Claims

1. A method for operating a transportation system (20) comprising a plurality of vehicle platoons (20), each vehicle platoon having a lead vehicle (2) and a plurality of vehicles (3) following the lead vehicle, the method comprising the steps of controlling the vehicle platoons (21) by means of a control system (30), driving the vehicle platoons (21) one after the other along a road (22) according to a predetermined route, and controlling the vehicle platoons (21) such that the vehicle platoons pass a vehicle station (23) with a predetermined frequency.

2. A method according to claim 1, **characterized by** controlling the vehicle platoons (21) to maintain a predetermined distance (24) between the vehicle platoons.

3. A method according to claim 2, **characterized by** using the predetermined distance (24) between the vehicle platoons (21) for absorbing any accidental speed reduction of a vehicle platoon and thereafter accelerating the vehicle platoon for again achieving the predetermined distance between the vehicle platoons enabling the vehicle platoons to pass the vehicle station (23) with the predetermined frequency.

4. A method according to any of claims 1-3, **characterized by** controlling the vehicle platoons (21) such that the time between the point in time when a first vehicle platoon (21a) reaches the vehicle station (23a) and the point in time when the next vehicle platoon (21b) reaches the vehicle station (23a) is above 1.5 times, preferably above 2 times, the time for the entire first vehicle platoon (21a) to pass the vehicle station (23).

5. A method according to claim 4, **characterized by** controlling the vehicle platoons (21) such that the time between the point in time when the first vehicle platoon (21a) reaches the vehicle station (23a) and the point in time when the next vehicle platoon (21b) reaches the vehicle station (23a) is below 10 times, preferably below 5 times, the time for the entire first vehicle platoon (21a) to pass the vehicle station (23).

6. A method according to any preceding claim, **characterized by** driving the vehicle platoons (21) with a predetermined substantially constant speed.

7. A method according to any preceding claim, **characterized by** providing vehicles (25) for the vehicle platoons (21) at the vehicle station (23), receiving information about the vehicle platoons which will pass the vehicle station without stopping at the vehicle station, and, based on the received information about a vehicle platoon incoming to the vehicle station, controlling a vehicle of the vehicles (25) at the vehicle station (23) to leave the vehicle station and accelerate along an acceleration ramp connected to the road, and thereafter controlling the vehicle to connect to the vehicle platoon (21) when the vehicle platoon passes the vehicle station (23).

8. A control system (30) for controlling vehicles of a transportation system (20) comprising a plurality of vehicle platoons (21), each vehicle platoon having a lead vehicle (2) and a plurality of vehicles (3) following the lead vehicle, the control system (30) being configured to control the vehicle platoons (21) to drive one after the other along a road (22) according to a predetermined route, and to control the vehicle platoons (21) such that the vehicle platoons pass a vehicle station (23) with a predetermined frequency.

9. A control system according to claim 8, **characterized in that** the control system (30) is configured to control the vehicle platoons (21) to maintain a predetermined distance (24) between the vehicle platoons.

10. A control system according to claim 9, **characterized in that** the control system (30) is configured to control the vehicle platoons (21) in a way using the predetermined distance (24) between the vehicle platoons for absorbing any accidental speed reduction of a vehicle platoon and thereafter control the acceleration of the vehicle platoon for again achieving the predetermined distance between the vehicle platoons enabling the vehicle platoons to pass the vehicle station (23) with the predetermined frequency.

11. A control system according to any of claims 8-10, **characterized in that** the control system (30) is configured to control the vehicle platoons (21) such that the time between the point in time when a first vehicle platoon (21a) reaches the vehicle station (23a) and the point in time when the next vehicle platoon (21b) reaches the vehicle station (23a) is above 1.5 times, preferably above 2 times, the time for the entire first vehicle platoon (21a) to pass the vehicle station (23a).

12. A control system according to claim 11, **characterized in that** the control system (30) is configured to control vehicle platoons (21) such that the time between the point in time when the first vehicle platoon (21a) reaches the vehicle station (23a) and the point in time when the next vehicle platoon (21b) reaches the vehicle station (23a) is below 10 times, preferably below 5 times, the time for the entire first vehicle platoon (21a) to pass the vehicle station (23a).

13. A control system according to any of claims 8-12, **characterized in that** the control system (30) is configured to drive the vehicle platoons (21) with a predetermined substantially constant speed.

14. A computer program comprising program code means for performing a method according to any of claims 1-7.

15. A transportation system (20) comprising a plurality of vehicle platoons (21), each vehicle platoon having a lead vehicle (2) and a plurality of vehicles (3) following the lead vehicle, and a control system (30) configured to control the vehicle platoons (21) to drive one after the other along a road (22) according to a predetermined route such that the vehicle platoons (21) pass a vehicle station (23) with a predetermined frequency.
